# EUROPÄISCHE PATENTANMELDUNG

(11) **EP 3 459 781 A2**
(43) Veröffentlichungstag der Anmeldung: **27.03.2019**
(21) Anmeldenummer: 18191988.7
(22) Anmeldetag: 31.08.2018
(51) Int. Cl.: B60L 5/00, B60L 5/39, B60L 9/00, B60M 1/32, B61B 13/00, B66C 7/12, H02J 50/10, H04B 5/00, B65G 54/02, B65G 1/04

(54) **SCHIENENGEBUNDENES TRANSPORTSYSTEM, SCHIENENSYSTEM UND SCHIENENFAHRZEUG FÜR EIN SCHIENENGEBUNDENES TRANSPORTSYSTEM**

(30) Priorität: 01.09.2017 DE 102017120197
(71) Anmelder: Flex-Conti GmbH, 49824 Laar (DE)
(72) Erfinder: Ranters, Gerold, 49824 Laar (DE)
(74) Vertreter: Träger, Denis

(57) **Zusammenfassung**

Die Erfindung betrifft ein schienengebundenes Transportsystem (10) für die innerbetriebliche Logistik zum Transport von Transporteinheiten, wie insbesondere Behältern (34) und/oder Gütern und/oder Geräten, mittels eines Schienensystems (11), insbesondere eines Schienennetzes. Es ist wenigstens ein Schienenfahrzeug (13) entlang des Schienensystems (11) fahrbar angeordnet, wobei das wenigstens eine Schienenfahrzeug (13) wenigstens ein Fahrwerk (30), vorzugsweise mit mehreren Rollelementen und/oder Rädern (32) und wenigstens einem eigenen, vorzugsweise elektrischen Antrieb aufweist. Die Erfindung zeichnet sich dadurch aus, dass entlang des Schienensystems (11) Mittel zur induktiven Energieübertragung von elektrischer Energie für das wenigstens eine Schienenfahrzeug (34) vorgesehen sind. Des Weiteren werden ein Schienensystem (11) und ein Schienenfahrzeug (13) für ein solches schienengebundenes Transportsystem (10) beschrieben.

## Beschreibung

Die Erfindung betrifft ein schienengebundenes Transportsystem gemäß dem Oberbegriff des Anspruchs 1. Des Weiteren betrifft die Erfindung ein Schienensystem gemäß dem Oberbegriff des Anspruchs 11. Schließlich betrifft die Erfindung ein Schienenfahrzeug gemäß dem Oberbegriff des Anspruchs 13.

Die hier beschriebenen schienengebundenen Transportsysteme sind zum Transportieren von Nutzlasten in der innerbetrieblichen Logistik ausgelegt. Es können dabei beispielsweise Waren und/oder Güter, aber auch Behältern und/oder Geräte transportiert werden. Grundsätzlich sind hier die Abmessungen und weiteren Eigenschaften sowohl des Transportsystems als Ganzes wie auch der einzelnen Komponenten auf diesen innerbetrieblichen Verkehr und die damit einhergehenden Anforderungen angepasst. Die sogenannte innerbetriebliche Logistik betrifft dabei insbesondere Transportvorgänge, wie sie beispielsweise üblicherweise innerhalb von Fertigungsstätten, Produktionsanlagen, Lagern oder auch Kommissionierungseinheiten auftreten.

Bekannte Lösungen verwenden dabei Schienensysteme, auf denen Schienenfahrzeuge entlangfahren können. Dazu weisen die Schienenfahrzeuge geeignete Rollelemente, also beispielsweise Räder auf. Mit dieses können sie entlang der Schienen relativ reibungsarm verfahren werden.

Im Stand der Technik werden derartige Schienenfahrzeuge beziehungsweise wird das Schienensystem mit zentralen Antrieben ausgestattet, beispielsweise Kettentrieben, Radantrieben oder auch Förderbändern. Diese Antriebsarten sind im Bereich der Schienensysteme beziehungsweise Schienenwege verbaut, um so die Fahrzeuge bewegen zu können, beispielsweise über entsprechende Mitnehmer an den Fahrzeugen. Aufgrund zentraler Antriebe ist eine individuelle Steuerung der Fortbewegung einzelner Schienenfahrzeuge nur schwer möglich, beispielsweise mittels gezielten Bremsens oder Trennen vom zentralen Antrieb.

Daher wurde in der Vergangenheit bereits die Verwendung separater Antriebe je Schienenfahrzeug vorgeschlagen. Dabei ist die Versorgung mit elektrischer Energie sicherzustellen. Hierzu gehen aus dem Stand der Technik Schleifkontakte mit entsprechenden Kontaktschienen entlang des Schienensystems hervor. Dies ist aber mit erheblichem Aufwand bei Bau und Betrieb verbunden, vor allem aufgrund von Reibungsverlusten und damit Abnutzungserscheinungen. Auch sind komplexere Fahrwege, beispielsweise durch den Einbau von Weichen oder anderen Verzweigungen, praktisch nicht umsetzbar, sofern eine kontinuierliche Versorgung mit elektrischer Energie sichergestellt werden soll.

Ausgehend davon ist es eine Aufgabe der Erfindung, ein schienengebundenes Transportsystem bereitzustellen, das die vorgenannten Nachteile beseitigt. Insbesondere soll es sicherstellen, dass eine kontinuierliche Energieversorgung bei gleichzeitig flexiblen Steuerungsmöglichkeiten der Schienenfahrzeuge erreicht werden kann. Schließlich sollen in diesem Zusammenhang auch ein entsprechendes Schienensystem wie entsprechend ausgebildete Schienenfahrzeuge angegeben werden.

Diese Aufgabe wird gelöst durch ein schienengebundenes Transportsystem mit den Merkmalen des Anspruchs 1. Ein derartiges schienengebundenes Transportsystem ist für die innerbetriebliche Logistik zum Transport von Transporteinheiten, wie insbesondere Behältern und/oder Waren und/oder Gütern und/oder Geräten, vorgesehen. Es weist ein Schienensystem, insbesondere ein Schienennetz, auf, wobei wenigstens ein Schienenfahrzeug entlang des Schienensystems fahrbar angeordnet ist. Das wenigstens eine Schienenfahrzeug weist wenigstens ein Fahrwerk auf, insbesondere mit mehreren Rollelementen und/oder Rädern. Vorzugsweise ist wenigstens ein eigener, vorzugsweise elektrischer Antrieb vorgesehen. So kann das Schienenfahrzeug entlang des Schienensystem beziehungsweise des Schienenfahrwegs bewegt werden, vorzugsweise verfahren. Das schienengebundene Transportsystem zeichnet sich dadurch aus, dass entlang des Schienensystems beziehungsweise Schienennetzes Mittel zur induktiven Energieübertragung von elektrischer Energie an das wenigstens eine Schienenfahrzeug vorgesehen sind. Somit kann das wenigstens eine Schienenfahrzeug entlang des Schienennetzes mittels induktiver Energieübertragung mit elektrischer Energie versorgt werden. Damit ist eine berührungslose Energieübertragung möglich, so dass dadurch insbesondere Reibung und Abnutzung vermieden werden können. Eine induktive Versorgung kann dabei in üblicher Weise mittels elektromagnetischer Wechselfelder erreicht werden.

Vorzugsweise ist die induktive Energieübertragung entlang des gesamten Schienennetzes vorgesehen. Weiter vorzugsweise erfolgt dies zumindest im Wesentlichen unterbrechungsfrei, also ohne wesentliche oder auch gänzlich ohne Unterbrechungen. Dies ist vor allem an Übergängen verschiedener Streckenabschnitte und/oder auch an Weichen wichtig. Insbesondere sind dazu Mittel zur induktiven Energieübertragung dem Schienensystem beziehungsweise Schienennetz zugeordnet, insbesondere dem gesamten Schienensystem. Vorzugsweise sind Mittel zur induktiven Energieübertragung einerseits dem Schienennetz und andererseits dem Schienenfahrzeug zugeordnet. Eine durchgängige Versorgung ermöglicht es, auf Hilfsmittel zur Überbrückung, wie Stromspeicher oder ähnliches, zu verzichten. Alternativ müssten nämlich zur Überbrückung von Unterbrechungen Stromspeicher, wie Akkus, Kondensatoren oder ähnliches, vorgesehen werden. Das schienengebundene Transportsystem weist bevorzugt wenigstens ein elektrisches Energieübertragungsmittel auf. Es ist dabei weiter vorzugsweise wenigstens ein elektrischer Leiter zur induktiven Energieübertragung vorgesehen, der insbesondere als elektrisches Energieübertragungsmittel dient. Dabei kann es sich insbesondere auch um zumindest eine Spule, vorzugsweise eine Vielzahl von Spulen, handeln. Somit kann eine induktive Energieübertragung sichergestellt werden.

Bevorzugt ist schließlich das wenigstens eine elektrische Energieübertragungsmittel einerseits vorzugsweise jeweils an und/oder im Bereich des Schienensystems beziehungsweise des Schienennetzes und/oder andererseits des Schienenfahrzeugs angeordnet ist. Insbesondere handelt es sich um korrespondierende Energieübertragungsmittel am Schienensystem und am Schienenfahrzeug. Indem die Energieübertragungsmittel speziell aufeinander angestimmt werden, kann eine besonders sichere Energieübertragung erreicht werden.

Besonders bevorzugt ist schienensystemseitig wenigstens eine induktive Stromschiene vorgesehen. Diese ist vorzugsweise als langgetrecktes und/oder flaches Element ausgebildet. Die Stromschiene beinhaltet entsprechende induktiv arbeitende Komponenten, wie beispielsweise elektrische Leiter oder auch Spulen. Schienenfahrzeugseitig ist vorzugsweise wenigstens ein mit der Stromschiene in Eingriff stehender induktiver Stromabnehmer ausgebildet. Der Stromabnehmer ist vorzugsweise die Stromschiene zumindest teilweise umgreifend ausgebildet, weiter vorzugsweise U-förmig. Demnach umgreift der Stromabnehmer die Stromschiene vorzugsweise, insbesondere von einer Seite aus, so dass die Schenkel des Stromabnehmers vorzugsweise oberhalb und unterhalb der Stromschiene angeordnet sind. Dabei ist bevorzugt eine berührungslose Anordnung vorgesehen, insbesondere durch entsprechende Abstände zwischen Stromabnehmer und Stromschiene. Gegebenenfalls, wenn auch nicht bevorzugt, können zumindest abschnittsweise auch Kontaktstellen zwischen Stromschiene und Stromabnehmer vorgesehen sein, wobei der Vorteil der Berührungslosigkeit entfiele. Der Stromabnehmer weist ebenfalls entsprechend induktiv arbeitende Komponenten auf, wie beispielsweise elektrische Leiter oder auch Spulen. Die induktiven Komponenten von Stromschiene und Stromabnehmer korrespondieren miteinander, insbesondere im Hinblick auf die für die induktive Energieübertragung zu erzeugenden elektromagnetischen Wechselfelder. Somit kann eine sichere und reibungslose Energieübertragung sichergestellt werden. Vorzugsweise können mehrere Stromschienen, insbesondere beidseitig des Schienensystems und/oder übereinander, und/oder mehrere Stromabnehmer, insbesondere beidseitig des Schienensystems und/oder übereinander und/oder hintereinander, vorgesehen sein. Damit lässt sich eine Unterbrechungsfreiheit der Stromversorgung noch besser sicherstellen.

Das wenigstens eine Schienenfahrzeug weist insbesondere wenigstens ein Chassis auf. Die wenigstens eine Transporteinheit ist vorzugsweise am Chassis befestigt ist, insbesondere lösbar. Die wenigstens eine Transporteinheit des Chassis des wenigstens einen Schienenfahrzeugs als Mittel zum Transport einer Nutzlast ausgebildet ist, vorzugsweise als Behältnis und/oder als Geräteaufnahme. Damit lassen sich unterschiedliche Einsatzzwecke erreichen. Neben dem Transport von Waren und Gütern in Behältern könne auch spezielle Arbeitseinsätze vorgesehen sein, insbesondere durch geeignete Geräte.

Vorzugsweise weist das wenigstens eine Schienenfahrzeug separate elektrische Antriebe für jedes der Räder auf. Die elektrischen Antriebe sind bevorzugt unabhängig voneinander ansteuerbar. So kann eine gezielte Steuerung der Fahrt jedes Fahrzeugs erreicht werden. Die Räder und/oder die Antriebe sind insbesondere Fahrwerk und/oder am Chassis angeordnet beziehungsweise an diesem befestigt. Das Fahrwerk ist bevorzugt mit dem Chassis verbunden. Damit kann ein Betrieb des Fahrwerks des Schienenfahrzeugs unabhängig von der Nutzlast erreicht werden.

Es ist insbesondere wenigstens eine Druckluftversorgung für das wenigstens eine Schienenfahrzeug vorgesehen. Die Druckluftversorgung ist vorzugsweise im Bereich des Schienensystems angeordnet, weiter vorzugsweise am Schienensystem. Es ist dazu vorzugsweise wenigstens ein Anschlussstück zur Verbindung mit einer externen Druckluftversorgung vorgesehen. Alternativ oder zusätzlich kann vorzugsweise wenigstens ein Druckluftaggregat, insbesondere ein elektrisches Druckluftaggregat, am Schienenfahrzeug vorgesehen sein, insbesondere zumindest als Teil der Nutzlast. Durch eine Druckluftversorgung können energieintensive Vorgänge am Fahrzeug auf einfache Weise abgewickelt werden, wie beispielsweise Hebevorgänge oder auch Haltevorgänge. Die Druckluft kann, insbesondere an entsprechenden Stationen, aus einer stationären Quelle entnommen werden, beispielsweise über entsprechende Druckluftleitungen beziehungsweise Druckluftanschlüsse. Ein Anschluss kann dann an diesen Entnahmestellen gezielt vorgenommen werden, insbesondere automatisch, zum Beispiel durch passgenaues Anfahren eines Anschlusses mit einem korrespondierenden Gegenstück. Eine mobile Druckluftversorgung auf dem Schienenfahrzeug kann durch Mitführen eines Kompressors erfolgen. Dieser kann dann elektrisch betrieben werden.

Es ist insbesondere ein Aufzugssystem als Teil des Schienensystems vorgesehen. Diese weist weiter vorzugsweise einen beweglichen Ersatzschienenabschnitt auf zum Schließen einer offenen Verbindung zwischen zwei Schienenabschnitten beim Betrieb des Aufzugssystems durch Wegbewegen eines Schienenabschnitts. Dazu ist der Ersatzschienenabschnitt bevorzugt mit einer Hebevorrichtung, insbesondere einer Hubschere, versehen, um so den Ersatzschienenabschnitt in eine Lücke zwischen zwei Schienenabschnitten einzubringen. Eine solche Lücke entsteht insbesondere, wenn das Aufzugssystem die Aufzugskabine auf eine andere Ebene verfährt.

Besonders bevorzugt ist wenigstens eine Datenverbindung zwischen dem Schienensystem und dem wenigstens einen Schienenfahrzeug vorgesehen. Die Datenverbindung ist weiter vorzugsweise induktiv vorgesehen, also analog zur Energieversorgung. Insbesondere erfolgt die Datenübertragung über das Energieübertragungsmittel zur elektrischen Energieversorgung, also sozusagen zusätzlich zur Energieversorgung. Zur Nutzung der bestehenden Übertragungsstrecken muss lediglich eine entsprechende Codierung der Daten vorgenommen werde.

Das Schienensystem weist insbesondere, abgesehen von einfachen linearen oder auch kurvigen Streckenabschnitten, zusätzliche Komponenten zur Steuerung der Bewegung der Schienenfahrzeuge entlang des Schienensystems auf. Damit sind Verzweigungen oder auch Richtungsänderungen, insbesondere in vertikaler Richtung gemeint. Es kann sich demnach insbesondere um Aufzüge, Drehteller, Abzweigungen, Weichen und anderes handeln. Derartige Steuerungseinrichtungen dienen zum Aufbau eines komplexen Schienensystems, das hohen Anforderungen gerecht werden kann. Dabei kann erfindungsgemäß sichergestellt werden, dass die Energieversorgung auch im Bereich dieser Übergänge unterbrechungsfrei oder zumindest nahezu unterbrechungsfrei erfolgt. Somit kann vorzugsweise auf Mittel zur Überbrückung der Energieversorgung verzichtet werden, wie auf Batterien, Akkus oder ähnliches.

Die eingangs geschilderte Aufgabe wird außerdem gelöst durch ein Schienensystem, insbesondere ein Schienennetz, mit den Merkmalen des Anspruchs 11. Das Schienensystem ist vorgesehen für ein schienengebundenes Transportsystem, wie es insbesondere oben beschrieben ist. Es weist Schienenabschnitten zur Fortbewegung wenigstens eines Schienenfahrzeugs daran entlang auf. Dazu dient insbesondere wenigstens ein Fahrwerk, vorzugsweise mittels dem Schienenfahrzeug zugeordneten Rollelementen, vorzugsweise Rädern. Das wenigstens eine Schienenfahrzeug weist außerdem wenigstens einen separaten, insbesondere elektrischen Antrieb auf. Das Schienennetz zeichnet sich dadurch aus, dass induktive Energieversorgungsmittel zur Sicherstellung der Versorgung des wenigstens einen Schienenfahrzeugs mit elektrischer Energie vorgesehen sind. Dies sorgt für eine berührungslose und sichere Energieübertragung, insbesondere auch ohne Unterbrechungen. Eine induktive Energieversorgung kann dabei in üblicher Weise mittels elektromagnetischer Wechselfelder erreicht werden.

Vorzugsweise sind zusätzliche Fortbewegungskomponenten vorgesehen, die zur Beeinflussung und/oder Steuerung der Bewegung des wenigstens einen Schienenfahrzeugs entlang des Schienensystems vorgesehen sind. Es handelt sich bei den Fortbewegungskomponenten insbesondere um Aufzüge, Drehteller, Abzweigungen und Weichen. Die Fortbewegungskomponenten sind vorzugsweise sich anschließend und/oder zwischen geraden und/oder gebogenen Streckenabschnitten angeordnet. Es ist vorzugsweise eine zumindest nahezu kontinuierliche Versorgung mit elektrischer Energie sowohl im Bereich der Schienenabschnitte wie auch im Bereich der Fortbewegungskomponenten vorgesehen.

Die eingangs geschilderte Aufgabe wird außerdem gelöst durch ein Schienenfahrzeug mit den Merkmalen des Anspruchs 13. Das Schienenfahrzeug ist für ein schienengebundenes Transportsystem vorgesehen, wie es insbesondere oben beschrieben ist. Es weist ein Chassis mit wenigstens einem Fahrwerk auf, vorzugsweise mit wenigstens einem Rollelement, weiter vorzugsweise wenigstens einem Rad, auf und wenigstens einen Antrieb für das wenigstens eine Rollelement zur Fortbewegung entlang eines Schienensystems. Es ist zum Transport wenigstens einer am Chassis befestigbaren Transporteinheit beziehungsweise Nutzlast, insbesondere für Waren und/oder Güter und/oder Geräte, ausgebildet, wobei wenigstens ein Energieübertragungsmittel zur Sicherstellung der elektrischen Energieversorgung entlang des Schienennetzes vorgesehen ist. Das Schienenfahrzeug zeichnet sich dadurch aus, dass das wenigstens eine Energieübertragungsmittel als induktives Energieübertragungsmittel ausgebildet ist. Dementsprechend wird elektrische Energie per Induktion zum Schienenfahrzeug übertragen. Damit wird eine berührungslose und verschleißfreie Energieübertragung ermöglicht.

Der wenigstens eine Antrieb des Schienenfahrzeugs ist insbesondere elektrisch ausgebildet. Damit kann die an das Schienenfahrzeug übertragene elektrische Energie unmittelbar für den Antrieb genutzt werden, also insbesondere ohne Umwandlung. Vorzugsweise ist jedem der Rollmittel ein separater Antrieb zugeordnet. Damit kann insbesondere eine individuelle Ansteuerung der Rollelemente vorgenommen werden.

Schließlich kann das Schienenfahrzeug insbesondere eine Druckluftversorgung aufweisen, insbesondere für den Betrieb des Fahrzeugs und/oder die Versorgung mitgeführter Geräte. Die Druckluftversorgung kann beispielsweise durch externen Anschluss und/oder auch durch Mitführen eines Druckluftaggregats vorgesehen sein. Ein mitgeführtes Druckluftaggregat kann dann insbesondere elektrisch betrieben werden, vorzugsweise mit der induktiv an das Schienenfahrzeug übertragenen elektrischen Energie. Insbesondere kann die Druckluft zum Betrieb wenigstens eines mitgeführten Geräts, wie beispielsweise eines Greifers, dienen.

Weitere bevorzugte Ausführungen der Erfindung sind den Ansprüchen wie auch der Beschreibung zu entnehmen. Hierbei können auch gegebenenfalls weitere Kombinationen von Merkmalen in Betracht kommen, auch wenn diese nicht explizit genannt oder diskutiert sind.

Ein bevorzugtes Ausführungsbeispiel der Erfindung wird im Folgenden anhand der Zeichnungen näher beschrieben. In diesen zeigen:
- Fig. 1: ein Längsschnitt eines erfindungsgemäßen schienengebundenen Transportsystems,
- Fig. 2: ein Querschnitt des Aufzugssystems des schienengebundenen Transportsystems der Fig. 1,
- Fig. 3: eine detaillierte Draufsicht auf einen Drehtisch des schienengebundenen Transportsystems,
- Fig. 4: einen Querschnitt durch den unteren Bereich eines erfindungsgemäßen Schienenfahrzeugs, und
- Fig. 5: eine ausschnittsweise Vergrößerung des Bereichs mit der induktiven Energieversorgung gemäß Fig. 4.

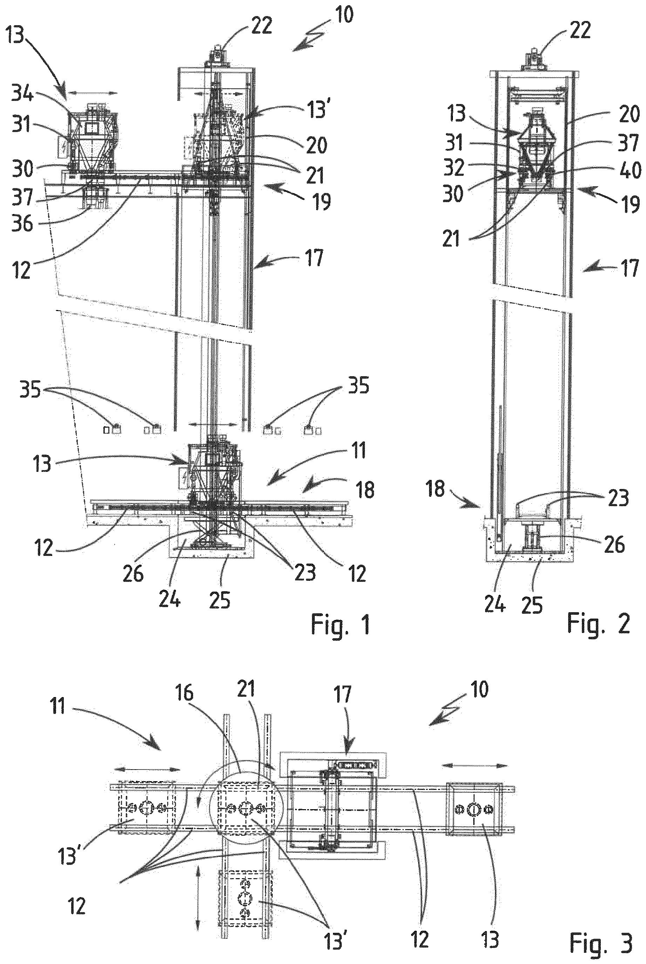

In der Fig. 1 ist ein Ausschnitt eines erfindungsgemäßen schienengebundenen Transportsystems 10 gezeigt. Dabei handelt es sich um ein innerbetrieblich eingesetztes Transportsystem 10, das beispielsweise zur Beförderung von Gütern, Waren, Produkten oder auch einfach von Lagerware zwischen verschiedenen innerhalb eines Betriebes dient. Dabei wird die jeweilige Nutzlast transportiert und gegebenenfalls bearbeitet, umgeladen, verpackt oder in anderer Art und Weise behandelt.

Beispielhaft sind in den Zeichnungen wesentliche Bestandteile eines derartigen schienengebundenen Transportsystems 10 gezeigt, wie insbesondere ein Schienen, Fahrzeuge und verschiedene weitere Komponenten.

Das hier beschriebene schienengebundene Transportsystem 10 basiert dabei naturgemäß auf einem Schienensystem 11. Schienen eignen sich für die Zwecke eines innerbetrieblichen Transportsystems besonders, da die Fahrtstrecken damit festgelegt sind und somit auch von jeglichen anderen Verkehr freigehalten werden können. Das Schienensystem 11 beinhaltet Schienenabschnitte 12, entlang deren sich ein Schienenfahrzeug 13 bewegen kann. Hierzu ist idealerweise wenigstens eine, hier nicht dargestellte Steuerungseinrichtung vorgesehen, die den Verkehr der Schienenfahrzeuge 13 zentral oder auch dezentral steuert beziehungsweise regelt.

Typischerweise spricht man bei einem Schienensystem 11 von einem Schienennetz, wenn es sich um ein verzweigtes Netz handelt, so dass also die Schienenfahrzeuge 13 unterschiedliche Wege abfahren können. Dazu sind dann entsprechende Verzweigungsmöglichkeiten erforderlich, wie beispielsweise Weichen, Drehtische, Aufzüge oder ähnliches. Einzelne dieser Komponenten werden im Folgenden näher beschrieben.

Beispielsweise ist in Fig. 3 beispielhaft ein Drehtisch 14 im Detail gezeigt. Ein derartiger Drehtisch 14 dient dazu, ein Schienenfahrzeug 13 von einer Fahrtrichtung in eine andere umzusetzen. Der Drehtisch 14 weist dazu eine Rotationsmöglichkeit auf. Dazu ist dazu in diesem Fall ein kurzer Streckenabschnitt 15 des Schienensystems 11 auf einem Drehteller 16 des Drehtisches 14 montiert. Dieser Drehteller 16 kann in seiner Ebene, also hier in der horizontalen mit vertikaler Drehachse, zumindest zwischen zwei oder mehr Stellungen rotiert werden, gegebenenfalls beliebig.

Im vorliegenden Fall sind zwei senkrecht zueinander angeordnete Stellungen vorgesehen, nämlich den sich anschließenden Schienenabschnitten 12 zugewandte Positionen. So kann ein Schienenfahrzeug 13 von einem feststehenden Schienenabschnitt 12 über den Schienenabschnitt 15 weiter auf den sich andererseits anschließenden Schienenabschnitt 12 verfahren werden. Falls das Schienenfahrzeug 13 auf dem Drehteller 16 stehenbleibt, kann durch Drehung desselben die Fortbewegungsrichtung entsprechend geändert werden.

Um dagegen die Schienenfahrzeuge 13 in unterschiedlichen Ebenen 18, 19 fahren lassen zu können, ist eine vertikale Bewegung erforderlich. Hier ist ein entsprechendes Aufzugssystem 17 gezeigt. Dieses Aufzugssystem 17 ist in der Lage, die Schienenfahrzeuge 13 zwischen verschiedenen Ebenen 18, 19 mit den dort jeweils verlaufenden Schienenabschnitten 12 in vertikaler Richtung zu bewegen.

Das Aufzugssystem 17 kann dazu, wie es hier insbesondere in Fig. 1 zu sehen ist, zwischen zwei oder mehr Ebenen 18, 19 auf und ab fahren. Hier sind beispielhaft eine untere Schienenebene 18 und eine obere Schienenebene 19 gezeigt. Abgesehen von der hier gezeigten im Wesentlichen rein vertikalen Bewegung kann prinzipiell auch eine Schrägfahrt eines Aufzugssystems 17 entlang einer schiefen Ebene für bestimmte Zwecke angebracht sein, beispielsweise bei Platzmangel.

Das Aufzugssystem 17 sorgt in jedem Fall dafür, dass ein in einer Aufzugskabine 20 montierter Schienenabschnitt 20 zwischen den Schienenebenen 18, 19 verfahren werden kann. Hierzu ist ein entsprechender Aufzugsantrieb 21 mit einer hier nicht dargestellten Steuerungseinrichtung vorgesehen. Diese sorgt dafür, dass die Kabine 20 von der unteren zur oberen Ebene 18, 19 und wieder zurück verfahren werden kann, jeweils einschließlich eines darin befindlichen Schienenfahrzeugs 13.

Ein derartiges Aufzugssystem 17 kann beispielsweise dazu verwendet werden, ein Schienenfahrzeug 13 auf eine andere Ebene anzuheben oder abzusenken. Dort kann es sich beispielsweise ebenfalls fortbewegen. In einer bevorzugten Weiterbildung der Erfindung kann das Aufzugssystem 17 aber auch dafür genutzt werden, Bearbeitungsschritte mit der jeweiligen Nutzlast des Schienenfahrzeugs 13 durchzuführen.

Dazu kann das Schienenfahrzeug 13 zunächst auf die höhere Ebene 19 angehoben werden. Dort findet die entsprechende Bearbeitung einer Nutzlast statt, wie beispielsweise ein Be- und/oder Entladen, ein Verpacken, eine mechanische Bearbeitung oder ähnliches. Anschließend kann das Aufzugssystem 17 die Nutzlast wieder zurück auf die Ausgangsebene 18 befördern. Dort angekommen kann das Schienenfahrzeug 13 seine Fahrt entlang des Schienensystems 11 fortsetzen. Alternativ kann das Schienenfahrzeug 13 natürlich auf der höheren Ebene belassen werden, um dort weiter zu fahren.

Sobald das Aufzugssystem 17 das Schienenfahrzeug 13 anhebt, wird naturgemäß der in der Aufzugskabine 20 befindliche Schienenabschnitt 21 ebenfalls angehoben. So wird das Schienensystem 11 im Bereich des Aufzugs 17 unterbrochen. Um nun während des Hebevorgangs weiterhin einen Verkehr von Schienenfahrzeugen 13 in diesem Bereich zuzulassen, muss der fehlende Schienenabschnitt 21 des Aufzugs 17 ersetzt werden.

Dazu wird in einer Aussparung 24 im Unterbau 25 der Anlage unterhalb des Aufzugs 17 ein Ersatzschienenabschnitt 23 gelagert. Dieser kann mittels eines geeigneten Hebezeugs, wie beispielsweise eines hier gezeigten Hubscherentisches 26, in die Lücke im Bereich des Aufzugs 17 eingefahren werden, wenn die Aufzugskabine 20 das untere Niveau 18 verlassen hat. Damit kann die Lücke im Schienensystem 11 temporär wieder durch den Schienenabschnitt 23 geschlossen werden, so dass die Schienenfahrzeuge 13 weiterhin die Strecke passieren können.

In den Fig. 1 bis 3 sind mehrere Schienenfahrzeuge 13' gestrichelt als Alternativpositionen eingezeichnet. Dies soll übliche Fahrwege eines Schienenfahrzeugs 13 entlang des Schienensystems 11 verdeutlichen.

Die Schienenfahrzeuge 13 weisen zur Bewegung entlang des Schienensystems 11 jeweils ein Fahrwerk 30 auf. Dieses Fahrwerk 30 ist mit einem Chassis 31 des Schienenfahrzeugs 13 verbunden. Das Chassis 31 dient als Grundgerüst des Schienenfahrzeugs 13 zur Verbindung der einzelnen Komponenten.

Das Fahrwerk 30 weist mehrere Räder 32 als Rollelemente zur Fortbewegung und zur Lagerung an beziehungsweise auf den Schienenabschnitten 12, 15, 21 auf. Typischerweise sind vier Räder 32 für die Fortbewegung und die Lagerung auf den Schienen des Schienensystems 11 vorgesehen. Zusätzlich können noch weitere Halteräder vorgesehen sein, die beispielsweise ein Herausspringen aus der Schienenführung durch einen Gegendruck verhindern. Dazu können derartige Halteräder zum Beispiel unterhalb der Schienen abrollen.

Ein Teil der Räder 32 ist jeweils mit einem Antrieb 33 verbunden. Idealerweise weisen dabei mehrere oder weist sogar jedes der Räder 32 eines Fahrwerks 30 einen eigenen, separaten Antrieb 33 auf. Damit kann eine individueller Antrieb und vor allem auch eine individuelle Steuerung der einzelnen Räder 32 ermöglicht werden.

Insbesondere kann das Schienenfahrzeug 13 nach oben auf die Schienen des Streckensystems 11 aufgesetzt verfahren werden. Grundsätzlich ist aber auch eine nach unten hängende Bauweise ohne weiteres denkbar, wobei insbesondere für eine entsprechende Anordnung von Rädern gesorgt werden muss.

Als Nutzlast der Schienenfahrzeuge 13 sind so verschiedene Dinge wie Halterungen, Behälter und auch Geräte denkbar. Eine typische Nutzlast ist ein Behälter 34. Derartige Behälter 34 können beispielsweise zur Aufnahme von Stückgut ausgebildet sein, wie beispielsweise einzelner Artikel oder Waren eines Lagers. Dann können beispielsweise Greifer, Förderbänder und ähnliches für das Zu- und Abliefern des Stückguts dienen. Insbesondere im Falle eines Behälters 34 für Schüttgut sind entsprechende Befüllstationen 35 und Abgabestationen 36 beziehungsweise Entnahmestellen vorzusehen. An den Befüllstationen 35 kann Schüttgut entsprechend in den Behälter 34 eingeladen werden. Die Abgabestationen 36 sind dazu ausgebildet, das Schüttgut aufzunehmen. Dazu weisen beispielsweise die Behälter 34 entsprechende, am Schienenfahrzeug 13 mitgeführte Abgabevorrichtungen 37 auf. Diese Abgabevorrichtungen 37 sind dabei typischerweise mit eine hier nicht dargestellten steuerbaren Verschlussvorrichtung ausgerüstet, die eine gezielte Abgabe von Schüttgut aus dem Behälter 34 ermöglicht.

Die Nutzlast, wie beispielsweise der Behälter 34, ist vorzugsweise lösbar am Chassis 31 des Schienenfahrzeugs 13 befestigt. So kann ein variabler Einsatz der Schienenfahrzeuge 13 ermöglicht werden. Insbesondere lassen sich so die Schienenfahrzeuge 13 für andere Einsatzzwecke umrüsten. Beispielsweise kann statt eines Behälters 34 auch ein Gerät, wie beispielsweise ein Greifer, ein Druckluftaggregat oder ähnliches eingesetzt werden, gegebenenfalls in Kombination mit einem kleineren Behälter oder einer anderen Transporteinrichtung. So lassen sich Bearbeitungsschritte unmittelbar am Schienenfahrzeug 13 vornehmen.

Zur Befestigung am Chassis 31 dient dabei insbesondere eine vordefinierte Aufnahmevorrichtung mit einer korrespondierenden Befestigungsvorrichtung an der Nutzlast. So können unterschiedliche Nutzlasten auf einfache Weise am Chassis 31 befestigt werden. Aufnahmevorrichtung und korrespondierende Befestigungsvorrichtung sind hier nicht im Detail gezeigt.

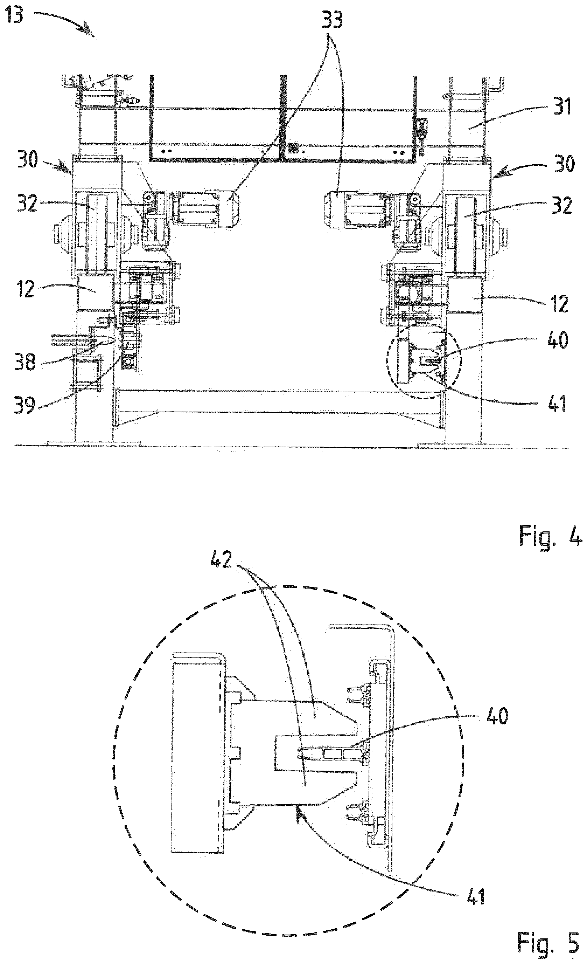

Zur genauen Positionierung und auch zur Fixierung des Schienenfahrzeugs 13 an einer Bearbeitungsstation kann beispielsweise eine Kombination von Haltedorn 38 und Dornaufnahme 39 vorgesehen sein, wie dies beispielsweise in Fig. 4 gezeigt ist. Der Dorn 38 kann dabei in die korrespondierende Dornaufnahme 39 eingefahren werden. Durch die spitze Form des Haltedorns 38 und auch gegebenenfalls eine konusförmige Ausbildung der Dornaufnahme 39 lassen sich auf einfache Weise auch kleinere und größere Positionsungenauigkeiten ausgleichen.

Der Haltedorn 38 kann typischerweise motorgetrieben oder auch druckluftgetrieben ein- und ausgefahren werden. Damit kann das Schienenfahrzeug an der entsprechenden Position genau positioniert und fixiert werden. So können unbeabsichtigte Verschiebungen und ähnliches wirksam verhindert werden. Vor der Weiterfahrt wird der Dorn 38 entsprechend wieder zurückgezogen.

In den Fig. 4 und 5 ist schließlich der untere Bereich des Schienenfahrzeugs 13 detailliert gezeigt, also insbesondere das Fahrwerk 30 und die induktive Energiezuführung. Die Fig. 5 zeigt dabei lediglich die wesentlichen Elemente des mit einem gestrichelten Kreis in der Fig. 4 markierten Bereichs.

Das Fahrwerk 30 weist für jedes der Räder 32 einen separaten Antrieb 33 auf. Diese sind hier als eigenständige elektrische Antriebsmotoren dargestellt. Das Fahrwerk 30 selbst ist unterhalb des eigentlichen Chassis 31 angeordnet und typischerweise mit diesem fest verbunden.

Am Schienenabschnitt 12 ist eine Stromschiene 40 vorgesehen. Diese Stromschiene 40 erstreckt sich dabei entlang des gesamten Schienensystems 11, um so die Energieversorgung vollständig sicherstellen zu können. Ein entsprechender Stromabnehmer 41 ist am Schienenfahrzeug 13 vorgesehen.

Sicherheitshalber können auch mehrere Stromschienen 40 am Schienensystem 11 vorgesehen sein, beispielsweise auf beiden Seiten des jeweiligen Schienenabschnitts 12, 15, 21. Auch können mehrere Stromabnehmer 41 am Schienenfahrzeug 13 angeordnet sein, um so jegliche Unterbrechungen bei der Energieversorgung vermeiden zu können.

Der Stromabnehmer 41 ist U-förmig ausgebildet. Er umgreift die Stromschiene 40 von der Seite, so dass jeweils einer der Stromabnehmerschenkel 42 des Stromabnehmers 41 oberhalb beziehungsweise unterhalb der Stromschiene 40 angeordnet ist. Damit kann eine optimale induktive Kopplung erreicht werden.

Stromschienen 40 wie auch Stromabnehmer 41 sind jeweils mit hier nicht gezeigten elektrischen Leitern ausgestattet. Es handelt sich dabei insbesondere um elektrische Spulen. So kann durch Anlegen elektromagnetischer Wechselfelder an die Stromschiene 41 oder die Stromschienen 41 eine induktive Kopplung von der Stromschiene 41 auf den oder die Stromabnehmer 41 erfolgen und so elektrische Energie übertragen werden.

Denkbar ist auch eine zusätzliche Datenübertragung über Stromschiene 41 und Stromabnehmer 41. Dazu sind ebenfalls Wechselfelder anzuregen, die allerdings mit entsprechenden Daten moduliert sind. Diese können gegebenenfalls auch auf die vorhandenen, zur Stromübertragung verwendeten Felder aufmoduliert werden.

Sofern umgekehrt auch das Schienenfahrzeug 13 Daten in Richtung Schienensystem 11 übertragen soll, muss gegebenenfalls eine entsprechende Einspeisung in dieser Richtung erfolgen. Beispielsweise kann dies für Rückmeldungen an zentrale oder auch dezentrale Steuerungseinrichtungen erforderlich sein. So lassen sich zum Beispiel Zustandsdaten oder Positionsdaten übertragen. Entsprechende Datenverbindungen lassen sich gegebenenfalls aber auch über Funkverbindungen oder ähnliches herstellen, insbesondere per WLAN, Bluetooth oder auch NFC.

**Bezugszeichenliste:**

| | | | |
|---|---|---|---|
| 10 | schienengebundenes Transportsystem | 36 | Abgabestation |
| | | 37 | Abgabevorrichtung |
| 11 | Schienensystem | 38 | Haltedorn |
| 12 | Schienenabschnitt | 39 | Dornaufnahme |
| 13 | Schienenfahrzeug | 40 | Stromschiene |
| 13' | Schienenfahrzeug (Altemativposition) | 41 | Stromabnehmer |
| | | 42 | Stromabnehmerschenkel |
| 14 | Drehtisch | | |
| 15 | Schienenabschnitt | | |
| 16 | Drehteller | | |
| 17 | Aufzugssystem | | |
| 18 | untere Schienenebene | | |
| 19 | obere Schienenebene | | |
| 20 | Aufzugskabine | | |
| 21 | Schienenabschnitt | | |
| 22 | Aufzugsantrieb | | |
| 23 | Ersatzschienenabschnitt | | |
| 24 | Aussparung | | |
| 25 | Unterbau | | |
| 26 | Hubscherentisch | | |
| 30 | Fahrwerk | | |
| 31 | Chassis | | |
| 32 | Rad | | |
| 33 | Antrieb | | |
| 34 | Behälter | | |
| 35 | Befüllstation | | |

## Patentansprüche

1. Schienengebundenes Transportsystem für die innerbetriebliche Logistik zum Transport von Transporteinheiten, wie insbesondere Behältern (34) und/oder Gütern und/oder Geräten, mittels eines Schienensystems (11), insbesondere eines Schienennetzes, wobei wenigstens ein Schienenfahrzeug (13) entlang des Schienensystems (11) fahrbar angeordnet ist, wobei das wenigstens eine Schienenfahrzeug (13) wenigstens ein Fahrwerk (30), vorzugsweise mit mehreren Rollelementen und/oder Rädern (32) und wenigstens einem eigenen, vorzugsweise elektrischen Antrieb aufweist, **dadurch gekennzeichnet, dass** entlang des Schienensystems (11) Mittel zur induktiven Energieübertragung von elektrischer Energie für das wenigstens eine Schienenfahrzeug (34) vorgesehen sind.

2. Schienengebundenes Transportsystem nach Anspruch 1, **dadurch gekennzeichnet, dass** die induktive Energieübertragung entlang des gesamten Schienensystems (11) vorgesehen ist, vorzugsweise zumindest im Wesentlichen unterbrechungsfrei, wobei vorzugsweise Mittel zur induktiven Energieübertragung einerseits dem Schienensystem (11) und andererseits dem Schienenfahrzeug (13) zugeordnet sind und/oder wobei wenigstens ein elektrisches Energieübertragungsmittel, vorzugsweise wenigstens ein elektrischer Leiter zur induktiven Energieübertragung vorgesehen ist, insbesondere zumindest eine Spule, vorzugsweise eine Vielzahl von Spulen.

3. Schienengebundenes Transportsystem nach Anspruch 1 oder 2, **dadurch gekennzeichnet, dass** das wenigstens eine elektrische Energieübertragungsmittel vorzugsweise jeweils an und/oder im Bereich des Schienensystems (11) und/oder des Schienenfahrzeugs (13) angeordnet ist, wobei insbesondere korrespondierende induktive Energieübertragungsmittel am Schienensystem (11) und am Schienenfahrzeug (13) vorgesehen sind.

4. Schienengebundenes Transportsystem nach einem der vorhergehenden Ansprüche, **dadurch gekennzeichnet, dass** schienensystemseitig wenigstens eine induktive Stromschiene (40) und schienenfahrzeugseitig wenigstens ein mit der Stromschiene (40) in Eingriff stehender induktiver Stromabnehmer (41) ausgebildet ist, vorzugsweise die Stromschiene (40) zumindest teilweise umgreifend, weiter vorzugsweise U-förmig.

5. Schienengebundenes Transportsystem nach einem der vorhergehenden Ansprüche, **dadurch gekennzeichnet, dass** das wenigstens eine Schienenfahrzeug (13) wenigstens ein Chassis (31) aufweist, wobei die wenigstens eine Transporteinheit am Chassis (31) befestigt ist, insbesondere lösbar, wobei die wenigstens eine Transporteinheit des Chassis (31) des wenigstens einen Schienenfahrzeugs (13) als Mittel zum Transport einer Nutzlast ausgebildet ist, vorzugsweise als Behältnis (34) und/oder als Geräteaufnahme.

6. Schienengebundenes Transportsystem nach einem der vorhergehenden Ansprüche, **dadurch gekennzeichnet, dass** das wenigstens eine Schienenfahrzeug (13) separate elektrische Antriebe (33) für jedes der Räder (32) aufweist, wobei die elektrischen Antriebe (33) unabhängig voneinander ansteuerbar sind und/oder wobei die Räder (32) und/oder die Antriebe (33) am Fahrwerk (30) und/oder am Chassis (31) angeordnet sind.

7. Schienengebundenes Transportsystem nach einem der vorhergehenden Ansprüche, **dadurch gekennzeichnet, dass** wenigstens eine Druckluftversorgung für das wenigstens eine Schienenfahrzeug (13) vorgesehen ist, wobei vorzugsweise im Bereich des Schienensystems (11), weiter vorzugsweise am Schienensystem (11), wenigstens ein Anschlussstück zur Verbindung mit einer externen Druckluftversorgung vorgesehen ist und/oder wobei vorzugsweise wenigstens ein Druckluftaggregat, insbesondere ein elektrisches Druckluftaggregat, am Schienenfahrzeug (13) vorgesehen ist, insbesondere zumindest als Teil der Nutzlast.

8. Schienengebundenes Transportsystem nach einem der vorhergehenden Ansprüche, **dadurch gekennzeichnet, dass** ein Aufzugssystem (17) als Teil des Schienensystems (11) vorgesehen ist, wobei das Aufzugssystem (17) einen beweglichen Ersatzschienenabschnitt (23) aufweist zum Schließen einer offenen Verbindung zwischen zwei Schienenabschnitten (12, 15) beim Betrieb des Aufzugssystems (17) durch Wegbewegen eines Schienenabschnitts (21).

9. Schienengebundenes Transportsystem nach einem der vorhergehenden Ansprüche, **dadurch gekennzeichnet, dass** wenigstens eine Datenverbindung zwischen dem Schienensystem (11) und dem wenigstens einen Schienenfahrzeug (13) vorgesehen ist, wobei die Datenverbindung vorzugsweise induktiv vorgesehen ist, vorzugsweise über das Energieübertragungsmittel zur elektrischen Energieversorgung.

10. Schienengebundenes Transportsystem nach einem der vorhergehenden Ansprüche, **dadurch gekennzeichnet, dass** das Schienensystem (11) abgesehen von Streckenabschnitten (12, 15, 21) zusätzliche Komponenten zur Steuerung der Bewegung der Schienenfahrzeuge (13) entlang des Schienensystems (11) aufweist, wie insbesondere Aufzüge (17), Drehteller (16), Abzweigungen und Weichen.

11. Schienensystem, insbesondere Schienennetz, für ein schienengebundenes Transportsystem (10), insbesondere nach einem der Ansprüche 1 bis 10, mit Schienenabschnitten (12, 15, 21, 23) zur Fortbewegung wenigstens eines Schienenfahrzeugs (13) daran entlang, insbesondere mittels dem Schienenfahrzeug (13) zugeordneten Rollelementen, vorzugsweise Rädern (32), wobei das wenigstens eine Schienenfahrzeug (13) wenigstens einen separaten, insbesondere elektrischen Antrieb (33) aufweist, **dadurch gekennzeichnet, dass** induktive Energieversorgungsmittel zur Sicherstellung der Versorgung des wenigstens einen Schienenfahrzeugs (13) mit elektrischer Energie vorgesehen sind.

12. Schienensystem nach Anspruch 11, **dadurch gekennzeichnet, dass** zusätzliche Fortbewegungskomponenten zur Beeinflussung und/oder Steuerung der Bewegung des wenigstens einen Schienenfahrzeugs entlang des Schienensystems vorgesehen sind, wie insbesondere Aufzüge (17), Drehteller (16), Abzweigungen und Weichen, wobei die Fortbewegungskomponenten vorzugsweise sich anschließend und/oder zwischen geraden und/oder gebogenen Schienenabschnitten (12, 15, 21, 23) angeordnet sind, und/oder wobei eine zumindest nahezu kontinuierliche Versorgung mit elektrischer Energie sowohl im Bereich der Schienenabschnitte (12, 15, 21, 23) wie auch im Bereich der Fortbewegungskomponenten vorgesehen ist.

13. Schienenfahrzeug für ein schienengebundenes Transportsystem, insbesondere nach einem der Ansprüche 1 bis 10, mit einem Chassis (31) mit wenigstens einem Fahrwerk (30) auf, vorzugsweise mit wenigstens einem Rollelement, weiter vorzugsweise wenigstens einem Rad (32), und wenigstens einem Antrieb (33) für das wenigstens eine Fahrwerk (30) und/oder Rollelement zur Fortbewegung entlang eines Schienensystems (11), insbesondere nach einem der Ansprüche 11 oder 12, und zum Transport wenigstens einer am Chassis (31) befestigbaren Transporteinheit beziehungsweise Nutzlast, insbesondere für Waren und/oder Güter und/oder Geräte, wobei wenigstens ein Energieübertragungsmittel zur Sicherstellung der elektrischen Energieversorgung entlang des Schienennetzes (11) vorgesehen ist, **dadurch gekennzeichnet, dass** das wenigstens eine Energieübertragungsmittel als induktives Energieübertragungsmittel ausgebildet ist.

14. Schienenfahrzeug nach Anspruch 13, **dadurch gekennzeichnet, dass** der wenigstens eine Antrieb (33) elektrisch ausgebildet ist, wobei vorzugsweise jedem der Rollmittel ein separater Antrieb (33) zugeordnet ist.

15. Schienenfahrzeug nach Anspruch 13 oder 14, **dadurch gekennzeichnet, dass** eine Druckluftversorgung durch externen Anschluss und/oder durch Mitführen eines Druckluftaggregats vorgesehen ist, insbesondere zum Betrieb wenigstens eines mitgeführten Geräts, wie beispielsweise eines Greifers.
